# EUROPEAN PATENT SPECIFICATION

(11) **EP 3 597 798 B1**
(45) Date of publication and mention of the grant of the patent: **05.08.2026**
(21) Application number: 18724930.5
(22) Date of filing: 21.02.2018
(51) Int. Cl.: B05D 5/00, B82Y 40/00, D01D 5/00, D01D 5/098, D06M 23/08, B32B 27/12, B32B 5/02

(54) **METHOD FOR THE ADHESION OF PARTICLES TO AN INERT SUBSTRATE**
VERFAHREN ZUM ANHAFTEN VON PARTIKELN AN EIN INERTES SUBSTRAT
PROCÉDÉ D'ADHÉSION DE PARTICULES SUR UN SUBSTRAT INERTE

(30) Priority: 13.03.2017 ES 201730327
(43) Date of publication of application: 22.01.2020
(73) Proprietor: Bionanopharma, S.L., 46980 Paterna (Valencia) (ES); Consejo Superior de Investigaciones Científicas (CSIC), 28006 Madrid (ES)
(72) Inventor: LAGARÓN CABELLO, José María, 46980 Paterna (Valencia) (ES); CASTRO REINA, Sergio, 46980 Paterna (Valencia) (ES); GALAN NEVADO, David, 46988 Paterna (Valencia) (ES)
(74) Representative: Pons Ariño, Angel
(86) International application number: PCT/ES2018/070125
(87) International publication number: WO 2018/167341

(56) References cited:
- JP-B2- 6 054 640
- US-A1- 2007 190 319
- NORIHIRO MIZOSHITA ET AL: "Versatile Antireflection Coating for Plastics: Partial Embedding of Mesoporous Silica Nanoparticles onto Substrate Surface", APPLIED MATERIALS & INTERFACES, vol. 8, no. 45, 1 November 2016 (2016-11-01), US, pages 31330 - 31338, XP055490289, ISSN: 1944-8244, DOI: 10.1021/acsami.6b10624

## Description

The present invention relates to a method for adhering particles with exceptional functional properties, such as hydrophobia, to an inert substrate.

The present invention falls within the area of nanotechnology, specifically in the sector where it is necessary to modify the surface properties of a material or substance, such as the food, pharmaceutical, biomedical or energy sector.

### STATE OF THE ART

The development of nanoscience in recent decades has allowed for the development of nano and microparticles with exceptional functional properties, such as, for example, superhydrophobicity, superhydrophilicity, superoleophobicity, catalytic properties, self-cleaning properties, self-repairable properties, etc.

The deposition of nanoparticles on macroscopic surfaces is a necessary step to transmit said exceptional functional properties derived from the nanometric size of the particles to large surfaces. The adhesion of nanoparticles to surfaces mainly depends on the properties thereof, which may or may not offer different adhesive forces (chemical, electrostatic, Van der Waals, diffusive). There are costly techniques such as vacuum deposition, nanoimprinting, or multiple surface treatments that are mainly used with conventional substrates.

The adhesion of nanoparticles to plastic surfaces has the drawback that these nanoparticles are easily deformed, have low temperature resistance and have little adherence to inorganic particles, such as most nanoparticles. Furthermore, deposition on plastic materials is usually complicated due to the fact that these materials are usually chemically inert and do not have anchoring cores that allow for adhesion.

The adhesion of nanoparticles to inert plastics can be favored by means of corona treatment which activates the plastic surface, thus allowing for better adhesion, but which is generally insufficient since the nanoparticle has a very small contact surface. Mizoshita and Tanaka [ACS Appl. Mater. Interfaces 2016, 8, 31330-31338] propose an alternative method based applying an alcoholic solution of nanoparticles on the plastic surface, followed by a treatment in a reactive atmosphere of chloroform; this reactive atmosphere increases the adhesion of the nanoparticles to the plastic substrate. However, the difficulty of scaling due to the use of the reactive atmosphere is evident.

For example, the use of hydrophobic coatings is one of the most used strategies to prevent the deterioration of the materials under very humid conditions. Materials with hydrophobic properties offer significant advantages, such as: they prevent the corrosion and staining of the surfaces (i.e. they are self-cleaning), they increase barrier properties against water vapor and they prevent the attack of microorganisms, among others.

There are different alternatives for generating hydrophobic coatings, including chemical modification and coating with plasma, among others (Rahmawan, Y., Xu, L., & Yang, S. Journal of Materials Chemistry A, doi: 10.1039/C2TA00288D, 2013). In particular, the deposition of nanoparticles with hydrophobic properties on any type of substrate has created important advantages in this field due to the fact that the materials on the nanoscale have a greater surface to volume ratio. However, the adhesion between the hydrophobic nanoparticles and the surface is insufficient.

Further prior art is disclosed in JP6054640.

Therefore, it is necessary to develop new methods for improving the adhesion properties between the particles with, for example, hydrophobic properties, and the substrate.

### DESCRIPTION OF THE INVENTION

The present invention relates to a method for adhering particles with exceptional functional properties to an inert substrate. The present invention is of special interest in various sectors, for example,
- in the food sector, where there is interest in highly slippery, hydrophobic, oleophobic, amphiphobic, amphiphilic also called amphipathic, superhydrophobic, superoleophobic, superamphiphobic, and superamphilic also called superamphipathic properties, or surfaces with an antioxidant and/or antimicrobial capacity;
- in the pharmaceutical or biomedical sector, where there is interest in antimicrobial surfaces; and
- in the energy sector, where there is interest in transparent, self-cleaning and/or non-reflecting surfaces.

In the present invention, a layer of adhesive fibers is used to join the inert substrate to particles that have exceptional functional properties, and a thermal treatment is then carried out which improves the adhesion of the particles deposited on said fibers, keeping the exceptional functional properties of the particles intact.

In the particular case of the invention, when plastic or biopolymer substrates are used, it has been observed that the system obtained with the method of the present invention is more transparent after the thermal treatment, keeping the intrinsic properties of the particles with excellent functional properties that are deposited on an inert substrate unaltered.

Therefore, in a first aspect, the present invention relates to a method for adhering particles to an inert substrate (hereinafter, "the method of the invention") characterized in that it comprises the following steps:
a) deposit adhesive fibers on an inert substrate by means of an electro-hydrodynamic or aero-hydrodynamic process or a combination of both processes;
b) optionally, thermally treat the deposit obtained in (a) at a temperature lower than the melting or degradation temperature of the adhesive fibers for a period of time between 0.1 s and 1 h;
c) homogeneously distribute particles of a size between 0.001 nm and 100 µm on the adhesive fibers obtained in step (a) or (b) by means of deposition; and
d) thermally treat the deposit obtained (c) at a temperature lower than the melting or degradation temperature of the adhesive fibers for a period of time between 0.1 s and 1 h.

In the present invention, "an inert substrate" is understood as a plastic, metal, ceramic or glass substrate with little or no capacity to adhere particles.

In a preferred embodiment, the substrate will be a thermoplastic, thermostable or elastomer plastic or a biopolymer.

Preferably, the inert substrate is selected from the list comprising polyolefins, polyesters, polyamides, polimides, polyketones, polyisocyanates, polysulphones, styrenic plastics, phenolic resins, amide resins, urea resins, melamine resins, polyester resins, epoxide resins, polycarbonates, polyvinylpyrrolidones, epoxy resins, polyacrylates, rubbers, polyurethanes, silicones, aramides, polybutadiene, polyisoprenes, polyacrylonitriles, polyvinylidene fluoride (PVDF), polyvinyl acetate (PVA), polyvinyl alcohol (PVOH), ethylene vinyl alcohol (EVOH) copolymer, ethylene-vinyl-alcohol (EVO), polyvinyl chloride (PVC), polyvinylidene chloride (PVDC) and a combination thereof.

Preferably, the substrate is a biopolymer selected from among proteins, polysaccharides, lipids, polyesters and a combination thereof.

The term "adhesive fibers" is understood in the present invention as the fibers that serve as an adhesive between the particles and the inert substrate.

In the method of the present invention, the adhesive fibers of step (a) are made up of any plastic whose melting temperature is typically lower than the softening temperature of the substrate.

Preferably, the adhesive fibers of the step (a) are comprised of
- polycaprolactone;
- polyamides, ethylene vinyl alcohol (EVOH) copolymers and derivatives thereof;
- or biopolymers.

Preferably, the biopolymers are selected from among peptides and natural or synthetic proteins obtained chemically or by genetic modification of microorganisms or plants and natural elements; synthetic polysaccharides obtained chemically or by genetic modification of microorganisms or plants; polypeptides, nucleic acids and synthetic nucleic acid polymers obtained chemically or by genetic modification of microorganisms or plants; biodegradable polyesters such as polylactic acid, polylactic-glycolic acid, adipic acid and derivatives thereof, and polyhydroxyalkanoates, polyhydroxybutyrate and its copolymers with valerate; and biomedical materials, such as hydroxyapatites, of the group of synthetic and natural (plant or animal) polysaccharides, such as cellulose and derivatives; carrageenans and derivatives; alginates, dextran, gum arabic and chitosan or any of the natural and synthetic derivatives thereof; and corn proteins (zein); gluten derivatives, such as gluten or the gliadin and glutenin fractions thereof; gelatin, casein and soy proteins and derivatives thereof; as well as natural or synthetic peptides preferably of the elastin type obtained chemically or by genetic modification of microorganisms or plants and mixtures thereof. More preferably, the biopolymers are biodegradable polyesters.

In another preferred embodiment of the method of the present invention, in addition to the polymers described in the previous paragraph, at least one additive that is selected from among plasticizers, emulsifiers, anti-flocculants, surfactants, process improvers, anti-static agents, cross-linking agents, foaming agents or any of the combinations thereof is added during the deposition of step (a). This additive can also be any additive used in the industry of the polymers known in the state of the art without size restrictions, in other words, including nano additives; and said additives can be used to provide better final properties to the final product or facilitate the processing thereof.

In the method of the present invention, the adhesive fibers of step (a) preferably have a diameter smaller than 5 µm.

As mentioned above, step (a) of the method of the invention relates to the deposition of adhesive fibers on an inert substrate. In a preferred embodiment, the deposit obtained after step (a) preferably has a thickness between 10 nm and 100 µm.

In step (a), the adhesive fibers are deposited by means of an electro-hydrodynamic or aero-hydrodynamic process or a combination of both. The solvents used in these deposition methods will be those that dissolve the polymer or adhering substance, which can be organic as well as polar, including water, ethanol, isopropanol, chloroform, dimethylformamide, acetone, acetic acid, TFA, etc.

Step (a) of the method of the invention relates to the deposition of adhesive fibers on an inert substrate; this is preferably carried out by means of an electro-hydrodynamic process with electrospinning.

Electrospinning is one of the most widely used methods for manufacturing meshes with micro- or nanometric fibers and with a high surface to volume ratio. This technique also enables obtaining fibers with high roughness on the surface and thick films by means of thermal and mechanical post-treatment. The electrospinning process consists of applying an electric field to a liquid droplet, generally a polymer solution. The electric force applied generates disturbances on the droplet, forming a geometric shape technically known as the "Taylor cone". When the electric field exceeds a critical value, a liquid stream or jet that moves toward a collector with an opposite charge is produced. Along the path of the stream, the solvent is evaporated, thus resulting in the formation of ultra-fine fibers.

In another preferred embodiment of step (a), the method is carried out by means of an aero-hydrodynamic process by means of blow spinning.

The method of the invention further comprises an optional step (b) for thermally treating the deposit obtained (a) at a temperature lower than the melting or degradation temperature of the adhesive fibers for a period of time between 0.1 s and 1 h.

In a preferred embodiment, step (b) is not optional, meaning that the method of the invention is characterized in that it comprises the followings steps:
a) deposit adhesive fibers on an inert substrate by means of an electro-hydrodynamic or aero-hydrodynamic process or a combination of both processes;
b) thermally treat the deposit obtained in (a) at a temperature lower than the melting or degradation temperature of the adhesive fibers for a period of time between 0.1 s and 1 h;
c) homogeneously distribute particles of a size between 0.001 nm and 100 µm on the adhesive fibers obtained in step (a) or (b) by means of deposition; and
d) thermally treat the deposit obtained (c) at a temperature lower than the melting or degradation temperature of the adhesive fibers for a period of time between 0.1 s and 1 h.

The thermal treatment of step (d) is preferably carried out by using a heating press even though this treatment is not exclusively limited to this technique, but rather any technique that can transmit heat in a controlled way.

In another preferred embodiment of the present invention, step (b) is carried out by applying pressure between 0.1 bar and 100 bar, preferably below 30 bar.

The method of the invention further comprises a step (c) for homogeneously distributing particles of a size between 0.001 nm and 100 µm on the adhesive fibers obtained in step (a) or (b) by means of deposition.

Preferably, the particles of step (c) have exceptional functional properties, such as hydrophobic, hydrophilic, oleophobic, oleophilic, amphiphobic, amphiphilic also called amphipathic, self-cleaning, antioxidant, antimicrobial, self-curing, UV-light absorbent or flame retardant properties, or serve as a barrier towards gases and vapors.

One application of great interest for the method of the present patent is the manufacture of hydrophobic surfaces. Hydrophobicity is defined as the property that the surface of some materials has to repel water. This property not only depends on the chemical composition of the surface, but also on the roughness thereof. The most commonly used parameter to measure hydrophobicity is the contact angle, defined as the angle that a liquid forms with respect to the surface of a solid substrate. When the contact angle is greater than 90°, it is said that the material is hydrophobic, while when this parameter is greater than 150°C, it is said that the material is superhydrophobic.

In a preferred embodiment of the method of the present invention, the particles of step (c) are selected from among cellulose nanocrystals, cellulose microfibers, kenaf nanofibers, keratin nanofibers, nanoclays, carbon nanotubes, carbon nanofibers, carbon nanosheets, metal oxides, metal hydroxides, nanosilica, silicon nanodioxide, metal nanoparticles, titanium nanodioxide with or without organic modification and a combination thereof. Preferably, the particles are selected from among nanosilica, silicon nanodioxide, titanium nanodioxide with or without organic modification and a combination thereof.

Silicon dioxide is obtained without limitation mainly by means of the extraction and purification of quartz. This product is suitable for many purposes; meanwhile for other purposes, chemical processing is necessary in order to make a product purer or, in another more suitable way, to make it more reactive or a fine-grained, for example.

Pyrogenic silica, sometimes called fumed silica, is a very fine form of silicon dioxide in the shape of colloidal particles. It is prepared by burning SiCl₄ in a flame of hydrocarbons rich in oxygen in order to produce a SiO₂ "fume".

The precipitated silica, also known as amorphous silica or silica gel, is produced by the acidification of sodium silicate solutions. The gelatinous precipitate is first washed and then dehydrated in order to produce colorless microporous silica.

Alternatively, fine sheets of silica spontaneously grow in silicon wafers by means of thermal oxidation. This route provides a layer that is very close to the surface (approximately 1 nm or 10 Å) of the so-called native oxides. Very high temperatures and alternative environments are used to make well-controlled layers of silicon dioxide grow on the silicon, for example, at temperatures between 600°C and 1200°C, using the so-called wet or dry oxidation with O₂.

Many routes to silicon dioxide begin with silicate esters, the most well-known being tetraethyl orthosilicate (TEOS). The dioxide is obtained by simply heating TEOS to 680°C - 730°C. By being highly stable, silicon dioxide results from many methods. Conceptually simple but with little practical value, the combustion of silane leads to silicon dioxide. This reaction is analogous to the combustion of methane.

In another preferred embodiment of the method of the present invention, the particles of step (c) are selected from among polytetrafluoroethylene (PTFE) and polystyrene.

Another preferred embodiment of the method of the present invention relates to when the particles of step (c) are selected from among hydroxyapatites and phosphates of organic salts, optionally modified preferably with quaternary ammonium salts and/or organosilanes.

The particles can be interspersed or modified with modifiers in order to ensure their compatibility with other materials. Therefore, they can be modified with quaternary ammonium salts and organosilanes, preferably substances allowed for the application, for example in the case of application in containers, which are allowed to come in contact with food (in other words, they are included in the lists of monomers and other starting substances authorized by law for their use in the manufacture of plastic materials and objects that are going to come in contact with foods, such as, but not limited to, hexadecyltrimethylammonium bromide, polyethylene glycol esters with aliphatic monocarboxylic acids (C6-C22) and ammonium and sodium sulphates thereof, perfluorooctanoic acid and ammonium salt thereof, N-methacryloyloxyethyl-N,N-dimethyl-N-carboxymethylammonium chloride, and bis(2-hydroxyethyl)-2-hydroxypropyl-3-(dodecyloxy)methylammonium chloride. Chitosan and derivatives thereof and/or combinations of the above can also be used. More preferably, quaternary ammonium salts such as hexadecyltrimethylammonium bromide and organosilanes will be used.

They can also be modified with metal salt particles, such as silver, copper, iron, nickel, and other particles or nanoparticles with microbial and oxygen absorbing properties, metal oxides, such as titanium oxide and zinc, non-metal oxides, such as chemically modified silicon oxides, and plastics, such as fluoropolymers (PTFA) or polystyrene, and/or combinations of the above.

Step (c) of the method of the invention is carried out by means of any technique for depositing the particles, preferably by means of electro-hydrodynamic deposition, aero-hydrodynamic deposition or a combination of both techniques. Alternatively, step (c) is carried out by means of electro-spraying, blow-spraying or gravimetric dusting. The blow-spraying technique is even more preferably selected from among pneumatic, piezo-electric or ultrasonic nebulization.

The final step of the method of the invention, step (d), relates to the thermal treatment of the deposit obtained in step (c) at a temperature lower than the melting or degradation temperature of the adhesive fibers used in step (a) for a period of time between 0.1 s and 1 h. Preferably, step (d) is carried out by applying pressure between 0.1 bar and 100 bar, more preferably below 30 bar.

In another preferred embodiment of the method of the present invention, step (d) is carried out by means of a heating press, a calender, an oven or an ultraviolet (UV) or infrared (IR) lamp.

Throughout the description and in the claims, the word "comprises" and its variants are not intended to exclude other technical characteristics, additives, components or steps. For those skilled in the art, other objects, advantages and characteristics of the invention may be deduced from both the description and the practical use of the invention. The following examples and drawings are provided by way of illustration, and are not meant to limit the present invention.

### BRIEF DESCRIPTION OF THE FIGURES

Figure 1 shows a diagram of the process of the present invention.
Figure 2 shows images of the measurement of the contact angle of the PET films coated with PLA nanofibers.
Figure 3 shows images of the measurement of the contact angle of the PET films coated with a layer of PLA nanofibers and another layer of organo-modified nanoparticles of SiO₂.
Figure 4 shows images of the measurement of the contact angle of the PE films coated with a layer of PCL nanofibers and another layer of organo-modified nanoparticles of SiO₂.
Figure 5 shows images of the measurement of the contact angle of the PE films coated with a layer of PCL nanofibers and another layer of PTFE nanoparticles.
Figure 6 shows images of the measurement of the contact angle with water (left) and olive oil (right) of the PE films coated with a layer of PCL nanofibers and another layer of PTFE nanoparticles.
Figure 7 shows images of the contact angle with water on the PET/PLA-NF/SiO₂ NPs and PET/PLA+TiO₂/SiO₂ NPs surfaces before (left column) and after (right column) the thermal treatment at 150°C for 3 s.
Figure 8 shows images of PET films: (A) PET without film; (B) PET/PLA processed at 50°C for 3 s; (C) PET/PLA processed at 50°C for 60 s; (D) PET/PLA processed at 60°C for 3 s; (E) PET/PLA processed at 60°C for 60 s and (F) PET/PLA processed at 70°C for 3 s.

### EXAMPLES

The invention is illustrated below by means of assays carried out by the inventors which reveal the effectiveness of the product of the invention.

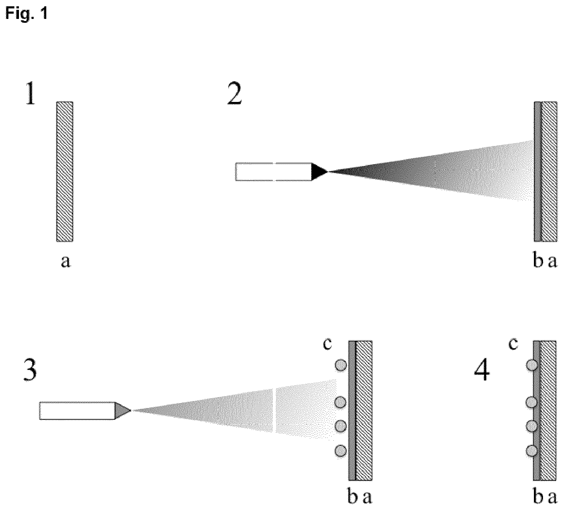

Fig. 1 shows the diagram of the method of the invention.

### Example 1. Deposition of polylactic acid (PLA) nanofibers obtained by means of electrospinning on polyethylene terephthalate (PET).

A solution of PLA at 15% by weight was prepared in a mixture of dimethylformamide (DMF) and acetone (1:1). Said mixture was electrospun on a PET sheet under the following conditions:
- electrical voltage: 17 kV,
- rate of injection: 1 mL/h
- and distance to the collector: 15 cm.

The sheets coated with the nanofibers were placed between two plates at 50°C for 3 s to promote adhesion between the sheets.

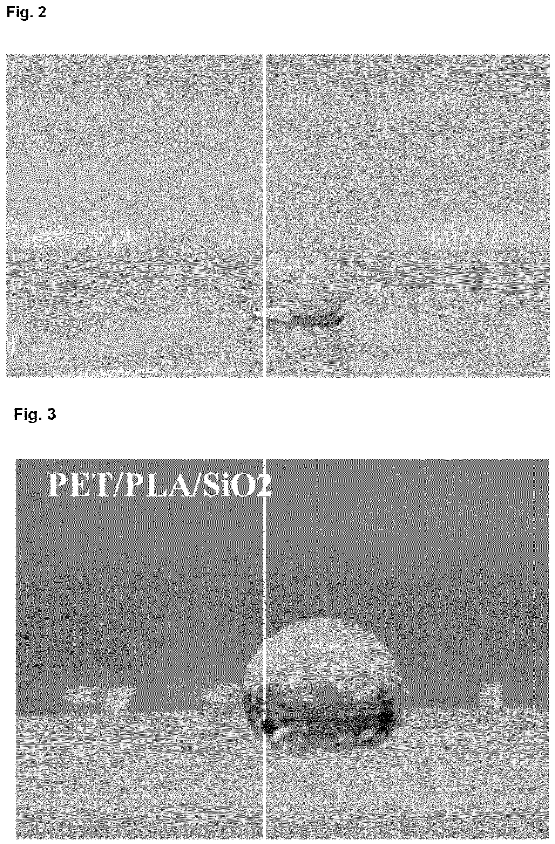

The PET films coated with PLA nanofibers showed contact angles of around 120°, characteristic of hydrophobic surfaces (See Fig. 2). It is observed that the porous morphology created during electrospinning favors hydrophobicity.

### Example 2. Deposition of modified silicon oxide nanoparticles (HDK H18 by Wacker) on the deposit obtained in Example 1.

PET films coated with PLA nanofibers were manufactured by using the method indicated in Example 1. A suspension of organo-modified silicon oxide particles (HDK H18 by Wacker) (1 % w/v in DMF) was deposited on these samples under the following conditions:
- electrical voltage: 10 kV,
- rate of injection: 0.3 mL/h and
- distance to the collector: 15 cm.

The coated PET films showed contact angles of around 130°, characteristic of hydrophobic surfaces (See Fig. 3). It is observed that the addition of the layer of organo-modified SiO₂ nanoparticles on the polymer layer improves the hydrophobic properties of the surface.

### Example 3. Deposition of polycaprolactone (PCL) nanofibers obtained by means of electrospinning on polyethylene (PE).

PE films coated with PCL nanofibers were manufactured by using the method indicated in Example 1.

### Example 4. Deposition of organo-modified silicon oxide nanoparticles on the deposit obtained in Example 3 and subsequent thermal treatment.

A suspension of organo-modified silicon oxide particles (HDK H18 by Wacker) (1 % w/v in butanol) was deposited on these samples under the following conditions:
- electrical voltage: 10 kV,
- rate of injection: 1 mL/h and
- distance to the collector: 15 cm.

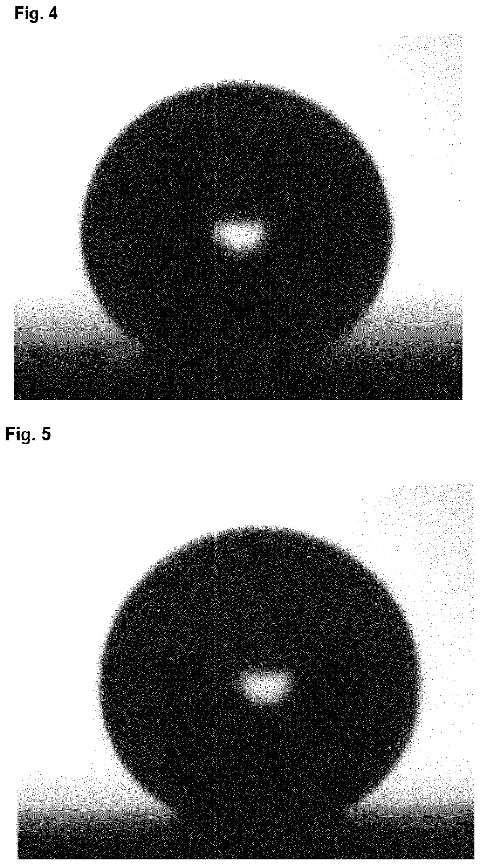

Next, a thermal treatment was carried out at 50°C for 3 minutes. The coated PE films showed contact angles of around 160°, characteristic of superhydrophobic surfaces (See Fig. 4). It is observed that the addition of the layer of organo-modified SiO₂ nanoparticles (HDK H18 by Wacker) on the polymer layer improves the hydrophobic properties of the surface.

### Example 5. Deposition of micronized polytetrafluoroethylene (PTFE) powder on the deposit obtained in Example 4 and subsequent thermal treatment.

PE films coated with PCL nanofibers were manufactured by using the method indicated in Example 1.

A micronized PTFE powder was deposited on these samples, followed by a thermal treatment at 50°C for 3 minutes. The coated PE films showed contact angles greater than 160°, characteristic of superhydrophobic surfaces (See Fig. 5). It is observed that the addition of the layer of PTFE microparticles on the polymer layer improves the hydrophobic properties of the surface.

### Example 6. Deposition of polycaprolactone (PCL) nanofibers obtained by means of electrospinning on polyethylene (PE) and subsequent thermal treatment.

PE films coated with PCL nanofibers were manufactured by using the method indicated in Example 1.

Next, a thermal pre-treatment was applied at 50°C for 1 minute with the aim of generating a flat film and favoring the oleophobic nature of the film.

### Example 7. Deposition of micronized PTFE powder on the deposit obtained in Example 6 and subsequent thermal treatment.

A micronized PTFE powder was deposited on these samples, followed by a thermal treatment at 50°C for 3 minutes.

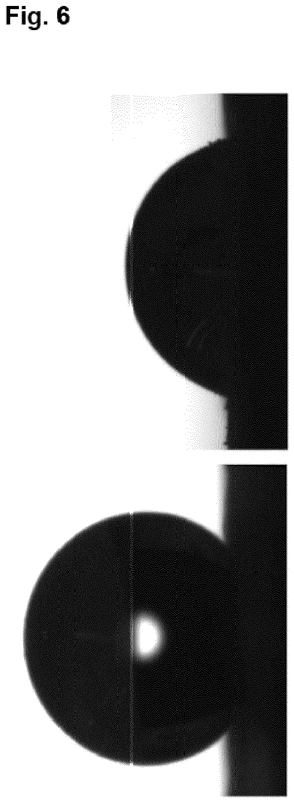

The coated PE films showed contact angles with the water close to 160°, characteristic of superhydrophobic surfaces, and contact angles with oils close to 70° (See Fig. 6), characteristic of hydrophobic surfaces. This methodology enables amphiphobic or amphiphilic, also called amphipathic, films to be created according to that which is described.

### Example 8. Deposition of SiO₂ and SiO₂/TiO₂ nanoparticles on the deposit obtained in Example 1 and subsequent thermal treatment.

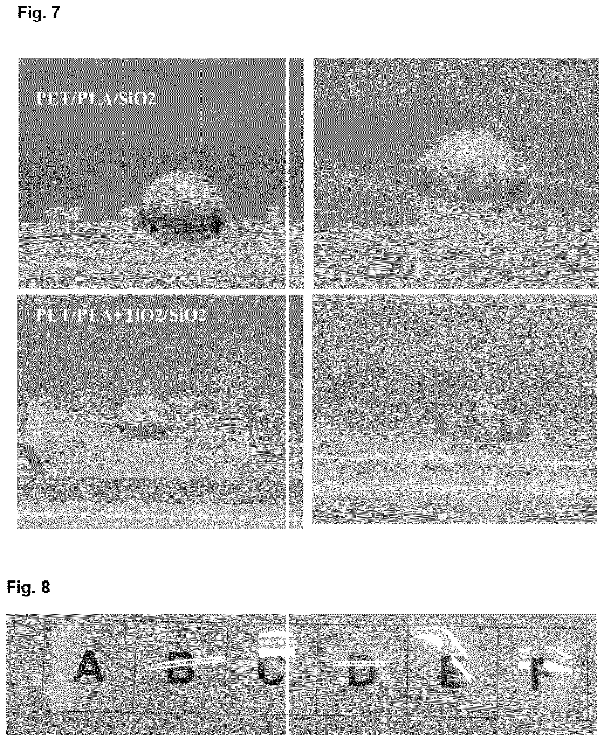

Two PET sheets coated in PLA were manufactured according to Example 1. SiO₂ and SiO₂/TiO₂ nanoparticles were deposited, respectively. Thermal post-treatment was applied to these sheets at a temperature of 150°C for 3 s with the aim of transforming the morphology of PLA nanofibers into a flat film with few hydrophobic properties. Fig. 7 (right column) shows how the contact angle is reduced drastically after treatment at a high temperature.

Table 1 shows the effect of temperature and time on the final contact angle. It is observed how the thermal treatment improves the adhesion of the nanoparticles, keeping some properties intact, such as hydrophobicity.

**Table 1. Effect of temperature and time on the contact angle of a water droplet.**

| Sample | Temperature (°C) | Time (s) | Contact angle (°) |
|---|---|---|---|
| A | 50 | 3 | 122 |
| B | | 60 | 90 |
| C | 60 | 3 | 134 |
| D | | 60 | 114 |
| E | 70 | 3 | 133 |
| F | | 60 | nd |

Another property of the film that is kept intact is transparency. Fig. 8 shows different films treated according to the different conditions defined in Table 1, covering printed letters on a paper. At first glance, it is observed how the different post-treatment conditions affect the the transparency of the film.

## Claims

1. A method for adhering particles to an inert substrate, **characterized in that** it comprises the following steps:
a) deposit adhesive fibers that serve as an adhesive between the particles and the inert substrate, on the inert substrate, selected from a thermoplastic, a thermostable or elastomer plastic and a biopolymer by means of an electro-hydrodynamic or aero-hydrodynamic process or a combination of both processes;
b) optionally, thermally treat the deposit obtained in (a) at a temperature lower than the melting or degradation temperature of the fibers for a period of time between 0.1 s and 1 h;
c) homogeneously distribute particles of a size between 0.001 nm and 100 µm on the fibers obtained in step (a) or (b) by means of deposition; and
d) thermally treat the deposit obtained in (c) at a temperature lower than the melting or degradation temperature of the fibers for a period of time between 0.1 s and 1 h.

2. The method according to claim 1, **characterized in that** it comprises the following steps:
a) deposit the fibers on the inert substrate selected from a thermoplastic, a thermostable or elastomer plastic and a biopolymer by means of an electro-hydrodynamic or aero-hydrodynamic process or a combination of both processes;
b) thermally treat the deposit obtained in (a) at a temperature lower than the melting or degradation temperature of the fibers for a period of time between 0.1 s and 1 h;
c) homogeneously distribute particles of a size between 0.001 nm and 100 µm on the fibers obtained in step (a) or (b) by means of deposition; and
d) thermally treat the deposit obtained in (c) at a temperature lower than the melting or degradation temperature of the fibers used in step (a) for a period of time between 0.1 s and 1 h.

3. The method according claims 1 or 2, **characterized in that** the inert substrate selected from a thermoplastic, a thermostable or elastomer plastic and a biopolymer is further
• selected from the list comprising polyolefins, polyesters, polyamides, polimides, polyketones, polyisocyanates, polysulphones, styrenic plastics, phenolic resins, amide resins, urea resins, melamine resins, polyester resins, epoxide resins, polycarbonates, polyvinylpyrrolidones, epoxy resins, polyacrylates, rubbers, polyurethanes, silicones, aramides, polybutadiene, polyisoprenes, polyacrylonitriles, polyvinylidene fluoride, polyvinyl acetate, polyvinyl alcohol, ethylene vinyl alcohol copolymer, ethylene-vinyl-alcohol, polyvinyl chloride, polyvinylidene chloride and a combination thereof
• or from among proteins, polysaccharides, lipids, polyesters and a combination thereof.

4. The method according to any of claims 1 to 3, **characterized in that** the fibers of step (a) are comprised of
• polycaprolactone;
• polyamides, ethylene vinyl alcohol (EVOH) copolymers and derivatives thereof;
• or biopolymers selected from among peptides and natural or synthetic proteins obtained chemically or by genetic modification of microorganisms or plants and natural elements; synthetic polysaccharides obtained chemically or by genetic modification of microorganisms or plants; polypeptides, nucleic acids and synthetic nucleic acid polymers obtained chemically or by genetic modification of microorganisms or plants; biodegradable polyesters such as polylactic acid, polylactic-glycolic acid, adipic acid and derivatives thereof, and polyhydroxyalkanoates, polyhydroxybutyrate and its copolymers with valerate; and biomedical materials, such as hydroxyapatites, of the group of synthetic and natural (plant or animal) polysaccharides, such as cellulose and derivatives; carrageenans and derivatives; alginates, dextran, gum arabic and chitosan or any of the natural and synthetic derivatives thereof; and corn proteins (zein); gluten derivatives, such as gluten or the gliadin and glutenin fractions thereof; gelatin, casein and soy proteins and derivatives thereof; as well as natural or synthetic peptides preferably of the elastin type obtained chemically or by genetic modification of microorganisms or plants and mixtures thereof.

5. The method according to claim 4, **characterized in that** the biopolymers are biodegradable polyesters.

6. The method according to any of claims 1 to 5, **characterized in that** the fibers of step (a) have a diameter smaller than 5 µm.

7. The method according to any of claims 1 to 6, **characterized in that** the deposit obtained after step (a) has a thickness between 10 nm and 100 µm.

8. The method according to any of claims 1 to 7, **characterized in that** step (a) is carried out by means of
• an electro-hydrodynamic process with electrospinning
• or an aero-hydrodynamic process with blow spinning.

9. The method according to any of claims 1 to 8, **characterized in that** the particles of step (c) have hydrophobic, hydrophilic, oleophobic, oleophilic, amphiphobic, amphiphilic or amphipathic, self-cleaning, antioxidant, antimicrobial, self-curing, UV light absorbent or flame retardant properties, or serve as a barrier towards gases and vapors.

10. The method according to any of claims 1 to 9, **characterized in that** the particles of step (c) are selected from among cellulose nanocrystals, cellulose microfibers, kenaf nanofibers, keratin nanofibers, nanoclays, carbon nanotubes, carbon nanofibers, carbon nanosheets, metal oxides, silicon dioxide, pyrogenic silica, precipitated silica, metal hydroxides, nanosilica, silicon nanodioxide, metal nanoparticles, titanium nanodioxide with or without organic modification and a combination thereof.

11. The method according to claim 10, **characterized in that** the particles of step (c) are selected from among nanosilica, silicon nanodioxide, titanium nanodioxide with or without organic modification and a combination thereof.

12. The method according to any of claims 1 to 11, **characterized in that** the particles of step (c) are selected from among
• polytetrafluoroethylene and polystyrene
• or hydroxyapatites and phosphates of organic salts, optionally modified with quaternary ammonium salts and/or organosilanes.

13. The method according to any of claims 1 to 12, **characterized in that** step (c) is carried out by means of electro-hydrodynamic deposition, aero-hydrodynamic deposition or a combination of both techniques, preferably by means of electro-spraying, blow-spraying selected from among pneumatic, piezo-electric or ultrasonic nebulization, or gravimetric dusting.

14. The method according to any of claims 1 to 13, **characterized in that** step (d) is carried out by applying pressure between 0.1 bar and 100 bar, preferably by applying pressure below 30 bar.

15. The method according to any of claims 1 to 14, wherein step (d) is carried out by means of a heated press, a calender, an oven or an ultraviolet or infrared lamp.

## Patentansprüche

1. Verfahren zum Anhaften von Partikeln an ein inertes Substrat, **dadurch gekennzeichnet, dass** es die folgenden Schritte umfasst:
a) Ablagern von Klebefasern, die als Klebstoff zwischen den Partikeln und dem inerten Substrat dienen, auf dem inerten Substrat, ausgewählt aus einem thermoplastischen, einem thermostabilen oder elastomeren Kunststoff und einem Biopolymer mittels eines elektro-hydrodynamischen oder aero-hydrodynamischen Verfahrens oder einer Kombination aus beiden Verfahren;
b) optional thermisches Behandeln der in (a) erhaltenen Ablagerung bei einer Temperatur, die niedriger als die Schmelz- oder Abbautemperatur der Fasern ist, über einen Zeitraum zwischen 0,1 s und 1 h;
c) homogenes Verteilen von Partikeln mit einer Größe zwischen 0,001 nm und 100 µm auf den in Schritt (a) oder (b) erhaltenen Fasern mittels Ablagerung; und
b) thermisches Behandeln der in (c) erhaltenen Ablagerung bei einer Temperatur, die niedriger als die Schmelz- oder Abbautemperatur der Fasern ist, über einen Zeitraum zwischen 0,1 s und 1 h.

2. Verfahren gemäß Anspruch 1, **dadurch gekennzeichnet, dass** es die folgenden Schritte umfasst:
a) Ablagern der Fasern auf dem inerten Substrat, ausgewählt aus einem thermoplastischen, einem thermostabilen oder einem elastomeren Kunststoff und einem Biopolymer, mittels eines elektro-hydrodynamischen oder aero-hydrodynamischen Verfahrens oder einer Kombination aus beiden Verfahren;
b) thermisches Behandeln der in (a) erhaltenen Ablagerung bei einer Temperatur, die niedriger als die Schmelz- oder Abbautemperatur der Fasern ist, über einen Zeitraum zwischen 0,1 s und 1 h;
c) homogenes Verteilen von Partikeln mit einer Größe zwischen 0,001 nm und 100 µm auf den in Schritt (a) oder (b) erhaltenen Fasern mittels Ablagerung; und
d) thermisches Behandeln der in (c) erhaltenen Ablagerung bei einer Temperatur, die niedriger als die Schmelz- oder Abbautemperatur der in Schritt (a) verwendeten Fasern ist, über einen Zeitraum zwischen 0,1 s und 1 h.

3. Verfahren gemäß Anspruch 1 oder 2, **dadurch gekennzeichnet, dass** das inerte Substrat, ausgewählt aus einem thermoplastischen, einem thermostabilen oder elastomeren Kunststoff und einem Biopolymer, ferner
• aus der Liste ausgewählt ist, die Polyolefine, Polyester, Polyamide, Polyimide, Polyketone, Polyisocyanate, Polysulfone, Styrolkunststoffe, Phenolharze, Amidharze, Harnstoffharze, Melaminharze, Polyesterharze, Epoxidharze, Polycarbonate, Polyvinylpyrrolidone, Epoxidharze, Polyacrylate, Kautschuke, Polyurethane, Silikone, Aramide, Polybutadien, Polyisoprene, Polyacrylnitrile, Polyvinylidenfluorid, Polyvinylacetat, Polyvinylalkohol, Ethylen-Vinylalkohol-Copolymer, Ethylen-Vinylalkohol, Polyvinylchlorid, Polyvinylidenchlorid und eine Kombination davon umfasst
• oder aus Proteinen, Polysacchariden, Lipiden, Polyestern und einer Kombination davon.

4. Verfahren gemäß einem der Ansprüche 1 bis 3, **dadurch gekennzeichnet, dass** die Fasern von Schritt (a) aus Folgendem bestehen:
• Polycaprolacton;
• Polyamiden, Ethylen-Vinylalkohol-(EVOH)-Copolymeren und Derivaten davon;
• oder Biopolymeren, ausgewählt aus Peptiden und natürlichen oder synthetischen Proteinen, die chemisch oder durch genetische Modifikation von Mikroorganismen oder Pflanzen und natürlichen Elementen erhalten wurden; synthetischen Polysacchariden, die chemisch oder durch genetische Modifikation von Mikroorganismen oder Pflanzen erhalten wurden; Polypeptiden, Nukleinsäuren und synthetischen Nukleinsäurepolymeren, die chemisch oder durch genetische Modifikation von Mikroorganismen oder Pflanzen erhalten wurden; biologisch abbaubaren Polyestern wie zum Beispiel Polymilchsäure, Polymilch-Glykolsäure, Adipinsäure und Derivaten davon, sowie Polyhydroxyalkanoaten, Polyhydroxybutyrat und dessen Copolymeren mit Valerat; und biomedizinischen Materialien, wie zum Beispiel Hydroxylapatiten, aus der Gruppe der synthetischen und natürlichen (pflanzlichen oder tierischen) Polysaccharide, wie zum Beispiel Cellulose und Derivate; Carragenen und Derivaten; Alginaten, Dextran, Gummi arabicum und Chitosan oder einem der natürlichen und synthetischen Derivate davon; und Maisproteinen (Zein); Glutenderivaten wie zum Beispiel Gluten oder dessen Gliadin- und Gluteninfraktionen; Gelatine, Kasein und Sojaproteinen und Derivaten davon; sowie natürlichen oder synthetischen Peptiden, vorzugsweise vom Elastintyp, die chemisch oder durch genetische Modifikation von Mikroorganismen oder Pflanzen erhalten wurden, und Mischungen davon.

5. Verfahren gemäß Anspruch 4, **dadurch gekennzeichnet, dass** die Biopolymere biologisch abbaubare Polyester sind.

6. Verfahren gemäß einem der Ansprüche 1 bis 5, **dadurch gekennzeichnet, dass** die Fasern aus Schritt (a) einen Durchmesser von weniger als 5 µm aufweisen.

7. Verfahren gemäß einem der Ansprüche 1 bis 6, **dadurch gekennzeichnet, dass** die nach Schritt (a) erhaltene Ablagerung eine Dicke zwischen 10 nm und 100 µm aufweist.

8. Verfahren gemäß einem der Ansprüche 1 bis 7, **dadurch gekennzeichnet, dass** Schritt (a) durchgeführt wird mittels
• eines elektro-hydrodynamischen Prozesses mit Elektrospinnen
• oder eines aero-hydrodynamischen Prozesses mit Blasspinnen.

9. Verfahren gemäß einem der Ansprüche 1 bis 8, **dadurch gekennzeichnet, dass** die Partikel aus Schritt (c) hydrophobe, hydrophile, oleophobe, oleophile, amphiphobe, amphiphile oder amphipathische, selbstreinigende, antioxidative, antimikrobielle, selbsthärtende, UV-Licht absorbierende oder flammhemmende Eigenschaften aufweisen oder als Barriere gegen Gase und Dämpfe dienen.

10. Verfahren gemäß einem der Ansprüche 1 bis 9, **dadurch gekennzeichnet, dass** die Partikel aus Schritt (c) ausgewählt sind aus Zellulosenanokristallen, Zellulosemikrofasern, Kenaf-Nanofasern, Keratin-Nanofasern, Nanotonen, Kohlenstoffnanoröhren, Kohlenstoffnanofasern, Kohlenstoffnanoblättern, Metalloxiden, Siliciumdioxid, pyrogener Kieselsäure, gefällter Kieselsäure, Metallhydroxiden, Nanosilica, Siliciumnanodioxid, Metallnanopartikeln, Titannanodioxid mit oder ohne organische Modifikation und einer Kombination davon.

11. Verfahren gemäß Anspruch 10, **dadurch gekennzeichnet, dass** die Partikel aus Schritt (c) aus Nanosilica, Siliziumnanodioxid, Titannanodioxid mit oder ohne organische Modifikation und einer Kombination davon ausgewählt sind.

12. Verfahren gemäß einem der Ansprüche 1 bis 11, **dadurch gekennzeichnet, dass** die Partikel aus Schritt (c) ausgewählt sind aus
• Polytetrafluorethylen und Polystyrol
• oder Hydroxylapatiten und Phosphaten organischer Salze, gegebenenfalls modifiziert mit quaternären Ammoniumsalzen und/oder Organosilanen.

13. Verfahren gemäß einem der Ansprüche 1 bis 12, **dadurch gekennzeichnet, dass** Schritt
(c) mittels elektro-hydrodynamischer Ablagerung, aero-hydrodynamischer Ablagerung oder einer Kombination beider Techniken durchgeführt wird, vorzugsweise mittels Elektrosprühen, Blassprühen, ausgewählt aus pneumatischer, piezoelektrischer oder Ultraschallvernebelung, oder gravimetrischem Bestäuben.

14. Verfahren gemäß einem der Ansprüche 1 bis 13, **dadurch gekennzeichnet, dass** Schritt (d) durch Anwenden eines Drucks zwischen 0,1 bar und 100 bar, vorzugsweise durch Anwenden eines Drucks unter 30 bar, durchgeführt wird.

15. Verfahren gemäß einem der Ansprüche 1 bis 14, wobei Schritt (d) mittels einer beheizten Presse, eines Kalanders, eines Ofens oder einer Ultraviolettoder Infrarotlampe durchgeführt wird.

## Revendications

1. Procédé permettant de faire adhérer des particules à un substrat inerte, **caractérisé en ce qu'**il comprend les étapes suivantes :
a) déposer des fibres adhésives qui servent d'adhésif entre les particules et le substrat inerte, sur le substrat inerte, choisies parmi un thermoplastique, un plastique thermostable ou élastomère et un biopolymère au moyen d'un processus électro-hydrodynamique ou aéro-hydrodynamique ou d'une combinaison des deux processus ;
b) éventuellement, traiter thermiquement le dépôt obtenu à (a) à une température inférieure à la température de fusion ou de dégradation des fibres pendant un laps de temps compris entre 0,1 s et 1 h ;
c) répartir de façon homogène des particules d'une taille comprise entre 0,001 nm et 100 µm sur les fibres obtenues à l'étape (a) ou (b) au moyen d'un dépôt ; et
d) traiter thermiquement le dépôt obtenu à (c) à une température inférieure à la température de fusion ou de dégradation des fibres pendant un laps de temps compris entre 0,1 s et 1 h.

2. Procédé selon la revendication 1, **caractérisé en ce qu'**il comprend les étapes suivantes :
a) déposer les fibres sur le substrat inerte choisi parmi un thermoplastique, un plastique thermostable ou élastomère et un biopolymère au moyen d'un processus électro-hydrodynamique ou aéro-hydrodynamique ou d'une combinaison des deux processus ;
b) traiter thermiquement le dépôt obtenu à (a) à une température inférieure à la température de fusion ou de dégradation des fibres pendant un laps de temps compris entre 0,1 s et 1 h ;
c) répartir de façon homogène des particules d'une taille comprise entre 0,001 nm et 100 µm sur les fibres obtenues à l'étape (a) ou (b) au moyen d'un dépôt ; et
d) traiter thermiquement le dépôt obtenu à (c) à une température inférieure à la température de fusion ou de dégradation des fibres utilisées à l'étape (a) pendant un laps de temps compris entre 0,1 s et 1 h.

3. Procédé selon les revendications 1 ou 2, **caractérisé en ce que** le substrat inerte choisi parmi un thermoplastique, un plastique thermostable ou élastomère et un biopolymère est en outre
• choisi parmi la liste comprenant les polyoléfines, les polyesters, les polyamides, les polyimides, les polycétones, les polyisocyanates, les polysulfones, les plastiques styréniques, les résines phénoliques, les résines amides, les résines urée, les résines mélamine, les résines polyester, les résines époxyde, les polycarbonates, les polyvinylpyrrolidones, les résines époxy, les polyacrylates, les caoutchoucs, les polyuréthanes, les silicones, les aramides, le polybutadiène, les polyisoprènes, les polyacrylonitriles, le fluorure de polyvinylidène, l'acétate de polyvinyle, l'alcool polyvinylique, le copolymère d'éthylène et d'alcool vinylique, l'éthylène-alcool vinylique, le chlorure de polyvinyle, le chlorure de polyvinylidène et une combinaison de ce ceux-ci
• ou parmi les protéines, les polysaccharides, les lipides, les polyesters et une combinaison de ceux-ci.

4. Procédé selon l'une quelconque des revendications 1 à 3, **caractérisé en ce que** les fibres de l'étape (a) sont constituées de
• polycaprolactone ;
• polyamides, copolymères d'éthylène et d'alcool vinylique (EVOH) et dérivés de ceux-ci ;
• ou biopolymères choisis parmi les peptides et les protéines naturelles ou synthétiques obtenues chimiquement ou par modification génétique de micro-organismes ou de plantes et d'éléments naturels ; polysaccharides synthétiques obtenus chimiquement ou par modification génétique de micro-organismes ou de plantes ; polypeptides, acides nucléiques et polymères d'acides nucléiques synthétiques obtenus chimiquement ou par modification génétique de micro-organismes ou de plantes ; polyesters biodégradables tels que l'acide polylactique, l'acide polylactiqueglycolique, l'acide adipique et des dérivés de ceux-ci, et les polyhydroxyalcanoates, le polyhydroxybutyrate et ses copolymères avec le valérate ; et matériaux biomédicaux, tels que les hydroxyapatites, du groupe des polysaccharides synthétiques et naturels (végétaux ou animaux), tels que la cellulose et des dérivés ; carraghénanes et dérivés ; alginates, dextrane, gomme arabique et le chitosane ou l'un quelconque des dérivés naturels et synthétiques de ceux-ci ; et protéines de maïs (zéine) ; dérivés du gluten, tels que le gluten ou les fractions de gliadine et de gluténine de celui-ci ; gélatine, caséine et protéines de soja et dérivés de celles-ci ; ainsi que peptides naturels ou synthétiques, de préférence du type élastine, obtenus chimiquement ou par modification génétique de micro-organismes ou de plantes, et des mélanges de ceux-ci.

5. Procédé selon la revendication 4, **caractérisé en ce que** les biopolymères sont des polyesters biodégradables.

6. Procédé selon l'une quelconque des revendications 1 à 5, **caractérisé en ce que** les fibres de l'étape (a) ont un diamètre de moins de 5 µm.

7. Procédé selon l'une quelconque des revendications 1 à 6, **caractérisé en ce que** le dépôt obtenu après l'étape (a) a une épaisseur comprise entre 10 nm et 100 µm.

8. Procédé selon l'une quelconque des revendications 1 à 7, **caractérisé en ce que** l'étape (a) est mise en œuvre au moyen de
• un processus électro-hydrodynamique avec électrofilature
• ou un processus aéro-hydrodynamique avec filature par soufflage.

9. Procédé selon l'une quelconque des revendications 1 à 8, **caractérisé en ce que** les particules de l'étape (c) ont des propriétés hydrophobes, hydrophiles, oléophobes, oléophiles, amphiphobes, amphiphiles ou amphipathiques, autonettoyantes, antioxydantes, antimicrobiennes, autodurcissantes, absorbantes de lumière UV ou ignifuges, ou servent de barrière aux gaz et aux vapeurs.

10. Procédé selon l'une quelconque des revendications 1 à 9, **caractérisé en ce que** les particules de l'étape (c) sont choisies parmi les nanocristaux de cellulose, les microfibres de cellulose, les nanofibres de kenaf, les nanofibres de kératine, les nanoargiles, les nanotubes de carbone, les nanofibres de carbone, les nanofeuilles de carbone, les oxydes métalliques, le dioxyde de silicium, la silice pyrogène, la silice précipitée, les hydroxydes métalliques, la nanosilice, le nanodioxyde de silicium, les nanoparticules métalliques, le nanodioxyde de titane avec ou sans modification organique et une combinaison de ceux-ci.

11. Procédé selon la revendication 10, **caractérisé en ce que** les particules de l'étape (c) sont choisies parmi la nanosilice, le nanodioxyde de silicium, le nanodioxyde de titane avec ou sans modification organique et une combinaison de ceux-ci.

12. Procédé selon l'une quelconque des revendications 1 à 11, **caractérisé en ce que** les particules de l'étape (c) sont choisies parmi
• le polytétrafluoroéthylène et le polystyrène
• ou les hydroxyapatites et les phosphates de sels organiques, éventuellement modifiés avec des sels d'ammonium quaternaire et/ou des organosilanes.

13. Procédé selon l'une quelconque des revendications 1 à 12, **caractérisé en ce que** l'étape (c) est mise en œuvre au moyen d'un dépôt électro-hydrodynamique, d'un dépôt aéro-hydrodynamique ou d'une combinaison des deux techniques, de préférence au moyen d'une électro-pulvérisation, d'une pulvérisation par soufflage choisie parmi la nébulisation pneumatique, piézoélectrique ou ultrasonique, ou d'un saupoudrage gravimétrique.

14. Procédé selon l'une quelconque des revendications 1 à 13, **caractérisé en ce que** l'étape (d) est mise en œuvre par application d'une pression comprise entre 0,1 bar et 100 bars, de préférence par application d'une pression en dessous de 30 bars.

15. Procédé selon l'une quelconque des revendications 1 à 14, dans lequel l'étape (d) est mise en œuvre au moyen d'une presse chauffée, d'une calandre, d'un four ou d'une lampe ultraviolette ou infrarouge.
